(19) **Europäisches Patentamt / European Patent Office / Office européen des brevets**

(11) **EP 1 986 455 A1**

(12) **EUROPEAN PATENT APPLICATION**

(43) Date of publication:
**29.10.2008 Bulletin 2008/44**

(51) Int Cl.:
***H04Q 7/38*** *(2006.01)*

(21) Application number: **07008708.5**

(22) Date of filing: **27.04.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **MATSUSHITA ELECTRIC INDUSTRIAL CO., LTD.**
**Osaka 571-8501 (JP)**

(72) Inventors:
• **Löhr, Joachim**
  **63225 Langen**
  **Hessen (DE)**
• **Feuersänger, Martin**
  **63225 Langen**
  **Hessen (DE)**

(74) Representative: **Grünecker, Kinkeldey, Stockmair & Schwanhäusser Anwaltssozietät**
**Leopoldstrasse 4**
**80802 München (DE)**

(54) **Communication of scheduling related information in a mobile communication system**

(57)   The invention relates to method for communicating scheduling related information from a mobile terminal to a base station in the radio access network of a mobile communication system. Further, the invention also relates to a mobile terminal and a base station utilizing this method and a communication system. To avoid the allocation of resources that a mobile terminal may not utilize in view of restriction of uplink rate control by a scheduler, the invention suggests informing the scheduler on the status of a rate enforcement functionality of the uplink rate control function within a mobile terminal, so as t allow an adequate scheduling of uplink resources.

Fig. 6

**Description**

**FIELD OF THE INVENTION**

The invention relates to method for communicating scheduling related information from a mobile terminal to a base station in the radio access network of a mobile communication system. Further, the invention also relates to a mobile terminal and a base station utilizing this method and a communication system.

**TECHNICAL BACKGROUND**

**Long Term Evolution (LTE)**

Third-generation mobile systems (3G) based on WCDMA (Wideband Code Division Multiple Access) radio-access technology are being deployed on a broad scale all around the world. A first step in enhancing or evolving this technology entails introducing High-Speed Downlink Packet Access (HSDPA) and an enhanced uplink, also referred to as High Speed Uplink Packet Access (HSUPA), giving a radio-access technology that is highly competitive.
However, knowing that user and operator requirements and expectations will continue to evolve, the 3GPP (3rd Generation Partnership Project) has begun considering the next major step or evolution of the 3G standard to ensure the long-term competitiveness of 3G. The 3GPP launched a Study Item "Evolved UTRA and UTRAN" (abbreviated E-UTRA and E- UTRAN) also referred to as long-term evolution (LTE). The study will investigate means of achieving major leaps in performance in order to improve service provisioning and reduce user and operator costs.
It is generally assumed that there will be a convergence toward the use of Internet Protocols (IP), and all future services will be carried on top of IP. Therefore, the focus of the evolution is on enhancements to the packet-switched (PS) domain.
The main objectives of the evolution are to further improve service provisioning and reduce user and operator costs as already mentioned.
More specifically, some key performance and capability targets for the long-term evolution are

- Significantly higher data rates compared to HSDPA and HSUPA: envisioned target peak data rates of more than 100Mbps over the downlink and 50Mbps over the uplink
- Improved coverage: high data rates with wide-area coverage
- Significantly reduced latency in the user plane in the interest of improving the performance of higher layer protocols (for example, TCP) as well as reducing the delay associated with control plane procedures (for instance, session setup)
- Greater system capacity: threefold capacity compared to current standards.

One other key requirement of the long-term evolution is to allow for a smooth migration to these technologies.

**LTE architecture**

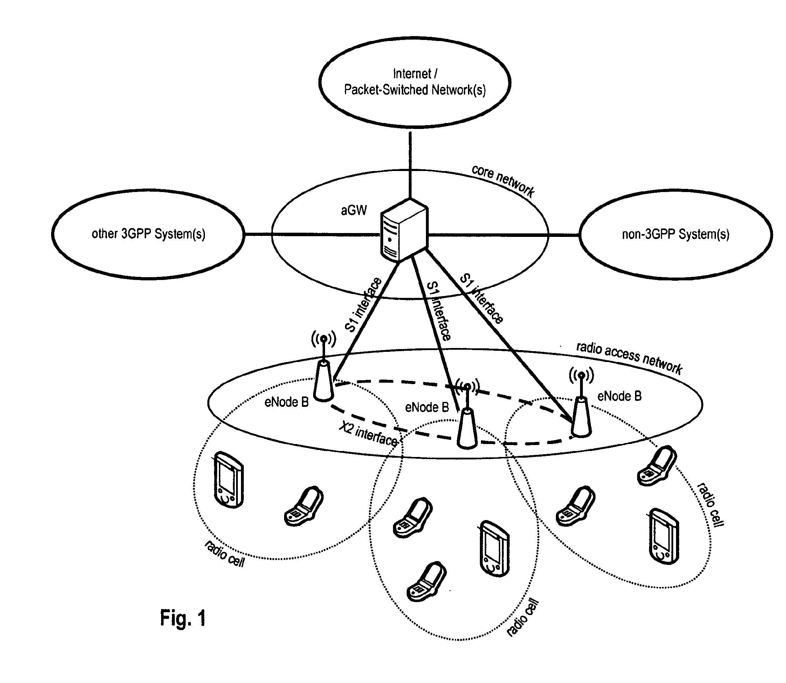

In Fig. 1 an overview of a 3GPP LTE mobile communication network is shown. The network consists of different network entities that are functionally grouped into the Core Network (CN), the Radio Access Network (RAN) and the User Equipments (UEs) or mobile terminals.
The radio access network is responsible for handling all radio-related functionality *inter alia* including scheduling of radio resources. The core network may be responsible for routing calls and data connections to external networks.
The LTE network is a "two node architecture" consisting of access gateways (aGW) and enhanced base stations, so-called eNode Bs (abbreviated eNB or eNode B). The access gateways will handle core network functions, i.e. routing calls and data connections to external networks, and also implement radio access network functions. Thus, the access gateway may be considered as to combine functions performed by GGSN (Gateway GPRS Support Node) and SGSN (Serving GPRS Support Node) in todays 3G networks and radio access network functions as for example header compression, ciphering/integrity protection. The eNodeBs may handle functions as for example Radio Resource Control (RRC), segmentation/concatenation, scheduling and allocation of resources, multiplexing and physical layer functions.
A mobile communication network is typically modular and it is therefore possible to have several network entities of the same type. The interconnections of network elements are defined by open interfaces. UEs can connect to an eNodeB via the air interface or Uu.
The eNodeBs have a connection to an access gateway via the S1 interface. Two eNodeBs are interconnected via the X2 interface.

Both 3GPP and Non-3GPP integration may be handled via the access gateway's interface to the external packet data networks (e.g. Internet).

## QoS control

Efficient Quality of Service (QoS) support is seen as a basic requirement by operators for LTE. In order to allow best in class user experience, while on the other hand optimizing the network resource utilization, enhanced QoS support should be integral part of the new system.

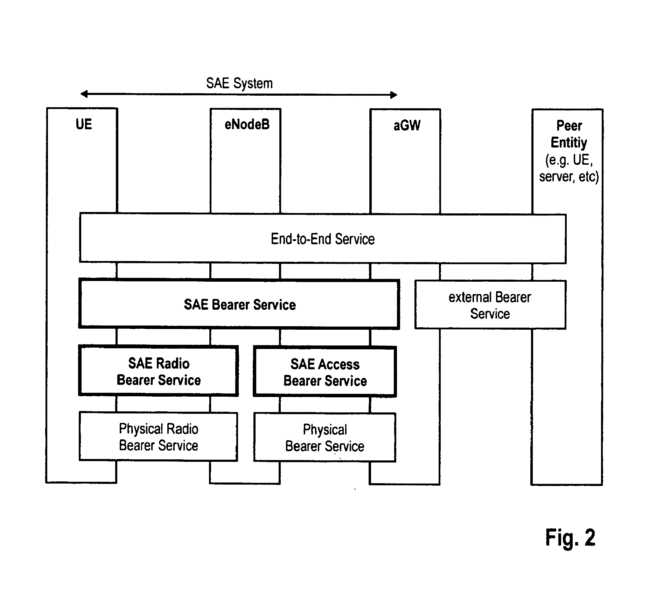

Aspects of QoS support is currently being under discussion within 3GPP working groups. Essentially, the QoS design for System Architecture Evolution (SAE)/LTE is based on the QoS design of the current UMTS system reflected in 3GPP TR 25.814, "Physical layer aspects for evolved Universal Terrestrial Radio Access (UTRA)", v.7.1.0 (available at http://www.3gpp.org and incorporated herein by reference). The agreed SAE Bearer Service architecture is depicted in Fig. 2. The definition of a bearer service as given in 3GPP TR 25.814 may still be applicable:

"A bearer service includes all aspects to enable the provision of a contracted QoS. These aspects are among others the control signaling, user plane transport and QoS management functionality".

In the new SAE/LTE architecture the following new bearers have been defined: the SAE Bearer service between the mobile terminal (User Equipment - UE) and the access gateway, the SAE Radio Bearer on the radio access network interface between mobile terminal and eNodeB as well as the SAE Access Bearer between the eNodeB and the access gateway.

The SAE Bearer Service provides:

- QoS-wise aggregation of IP end-to-end-service flows;
- IP header compression (and provision of related information to UE);
- User Plane (UP) encryption (and provision of related information to UE);
- if prioritized treatment of end-to-end-service signaling packets is required an additional SAE Bearer Service can be added to the default IP service;
- provision of mapping/multiplexing information to the UE;
- provision of accepted QoS information to the UE.

The SAE Radio Bearer Service provides:

- transport of the SAE Bearer Service data units between eNodeB and UE according to the required QoS;
- linking of the SAE Radio Bearer Service to the respective SAE Bearer Service.

The SAE Access Bearer Service provides:

- transport of the SAE Bearer Service data units between access gateway and eNodeB according to the required QoS;
- provision of aggregate QoS description of the SAE Bearer Service towards the eNodeB;
- linking of the SAE Access Bearer Service to the respective SAE Bearer Service.

In 3GPP TR 25.814 a one-to-one mapping between an SAE Bearer and an SAE Radio Bearer. Furthermore there is a one-to-one mapping between a radio bearer (RB) and a logical channel. From that definition it follows that a SAE Bearer, i.e. the corresponding SAE Radio Bearer and SAE Access Bearer, is the level of granularity for QoS control in an SAE/LTE access system. Packet flows mapped to the same SAE Bearer receive the same treatment. For LTE there will be two different SAE bearer types: the default SAE bearer with a default QoS profile, which is configured during initial access and the dedicated SAE bearer (SAE bearers may also be referred to as SAE bearer services) which is established for services requiring a QoS profile which is different from the default one.

The default SAE bearer is an "always on" SAE bearer that can be used immediately after LTE_IDLE to LTE_ACTIVE state transition. It carries all flows which have not been signalled a Traffic Flow Template (TFT). The Traffic Flow Template is used by access gateway to discriminate between different user payloads. The Traffic Flow Template incorporates packet filters such as QoS. Using the packet filters the access gateway maps the incoming data into the correct PDP Context (Packet Data Protocol Context). For the default SAE bearer, several service data flows can be multiplexed. Unlike the Default SAE Bearer, the Dedicated SAE Bearers are aimed at supporting identified services in a dedicated manner, typically to provide a guaranteed bit-rate. Dedicated SAE bearers are established by the access gateway based on the QoS information received in Policy and Charging Control (PCC) rules from core network when a new service is requested. A dedicated SAE bearer is associated with packet filters where the filters match only certain packets. A default SAE bearer is associated with "match all" packet filters for uplink and downlink. For uplink handling the access gateway builds the Traffic Flow Template filters for the dedicated SAE bearers. The UE maps service data flows to the correct bearer based on the Traffic Flow Template, which has been signaled during bearer establishment. As for the default SAE Bearer, also for the dedicated SAE Bearer several service data flows can be multiplexed.

The QoS Profile of the SAE bearer is signaled from the access gateway to the eNodeB during the SAE bearer setup procedure. This profile is then used by the eNodeB to derive a set of Layer 2 QoS parameters, which will determine the QoS handling on the air interface. The Layer 2 QoS parameters are input the scheduling functionality. The parameters included in the QoS profile signaled on S1 interface from access gateway to eNodeB are currently under discussion. Most likely the following QoS profile parameters are signaled for each SAE bearer: Traffic Handling Priority, Maximum Bit-rate, Guaranteed Bit-rate. In addition, the access gateway signals to the eNodeB the Allocation and Retention Priority for each user during initial access.

**Uplink Access scheme for LTE**

For uplink transmission, power-efficient user-terminal transmission is necessary to maximize coverage. Single-carrier transmission combined with FDMA (Frequency Division Multiple Access) with dynamic bandwidth allocation has been chosen as the evolved UTRA uplink transmission scheme. The main reason for the preference for single-carrier transmission is the lower peak-to-average power ratio (PAPR), compared to multi-carrier signals (OFDMA - Orthogonal Frequency Division Multiple Access), and the corresponding improved power-amplifier efficiency and assumed improved coverage (higher data rates for a given terminal peak power). During each time interval, Node B assigns users a unique time/frequency resource for transmitting user data thereby ensuring intra-cell orthogonality. An orthogonal access in the uplink promises increased spectral efficiency by eliminating intra-cell interference. Interference due to multipath propagation is handled at the base station (Node B), aided by insertion of a cyclic prefix in the transmitted signal.

The basic physical resource used for data transmission consists of a frequency resource of size $BW_{grant}$ during one time interval, e.g. a sub-frame of 0.5 ms, onto which coded information bits are mapped. It should be noted that a sub-frame, also referred to as transmission time interval (TTI), is the smallest time interval for user data transmission. It is however possible to assign a frequency resource $BW_{grant}$ over a longer time period than one TTI to a user by concatenation of sub-frames.

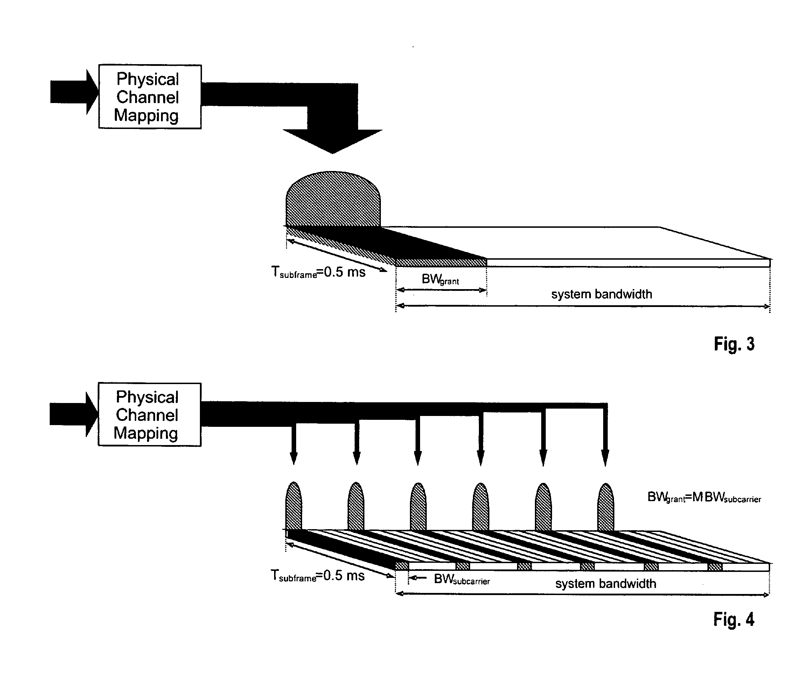

The frequency resource can either be in a localized or distributed spectrum as illustrated in Fig. 3 and Fig. 4. As can be seen from Fig. 3, localized single-carrier is characterized by the transmitted signal having a continuous spectrum that occupies a part of the total available spectrum. Different symbol rates (corresponding to different data rates) of the transmitted signal imply different bandwidths of a localized single-carrier signal.

On the other hand, as shown in Fig. 4, distributed single-carrier is characterized by the transmitted signal having a non-continuous ("comb-shaped") spectrum that is distributed over system bandwidth. Note that, although the distributed single-carrier signal is distributed over the system bandwidth, the total amount of occupied spectrum is, in essence, the same as that of localized single-carrier. Furthermore, for higher/lower symbol rate, the number of "comb-fingers" is increased/reduced, while the "bandwidth" of each "comb finger" remains the same.

At first glance, the spectrum in Fig. 4**Fehler! Verweisquelle konnte nicht gefunden werden.** may give the impression of a multi-carrier signal where each comb-finger corresponds to a "sub-carrier". However, from the time-domain signal-generation of a distributed single-carrier signal, it should be clear that what is being generated is a true single-carrier signal with a corresponding low peak-to-average power ratio. The key difference between a distributed single-carrier signal versus a multi-carrier signal, such as e.g. OFDM (Orthogonal Frequency Division Multiplex), is that, in the former case, each "sub-carrier" or "comb finger" does not carry a single modulation symbol. Instead each "comb-finger" carries information about all modulation symbols. This creates a dependency between the different comb-fingers that leads to the low-PAPR characteristics. It is the same dependency between the "comb fingers" that leads to a need for equalization unless the channel is frequency-non-selective over the entire transmission bandwidth. In contrast, for OFDM equalization is not needed as long as the channel is frequency-non-selective over the sub-carrier bandwidth.

Distributed transmission can provide a larger frequency diversity gain than localized transmission, while localized transmission more easily allows for channel-dependent scheduling. Note that, in many cases the scheduling decision may decide to give the whole bandwidth to a single UE to achieve high data rates.

**UL scheduling scheme for LTE**

The uplink scheme allows for both scheduled access, i.e. controlled by eNodeB, and contention-based access.

In case of scheduled access the UE is allocated a certain frequency resource for a certain time (i.e. a time/frequency resource) for uplink data transmission. However, some time/frequency resources can be allocated for contention-based access. Within these time/frequency resources, UEs can transmit without first being scheduled. One scenario where UE is making a contention-based access is for example the random access, i.e. when UE is performing initial access to a cell or for requesting uplink resources.

For the scheduled access Node B scheduler assigns a user a unique frequency/time resource for uplink data transmission. More specifically the scheduler determines

- which UE(s) that is (are) allowed to transmit,
- which physical channel resources (frequency),
- for how long the resources may be used (number of sub-frames)
- Transport format (Transport Block Size (TBS) and Modulation Coding Scheme (MCS)) to be used by the mobile terminal for transmission

The allocation information is signalled to the UE via a scheduling grant, sent on the so-called L1/L2 control channel. For simplicity reasons this downlink channel is referred to the "uplink grant channel" in the following. A scheduling grant message contains at least information which part of the frequency band the UE is allowed to use, the validity period of the grant, and the transport format the UE has to use for the upcoming uplink transmission. The shortest validity period is one sub-frame. Additional information may also be included in the grant message, depending on the selected scheme. Only "per UE" grants are used to grant the right to transmit on the Uplink Shared Channel UL-SCH (i.e. there are no "per UE per RB" grants). Therefore the UE needs to distribute the allocated resources among the radio bearers according to some rules, which will be explained in detail in the next section. Unlike in HSUPA there is no UE based transport format selection. The base station (eNodeB) decides the transport format based on some information, e.g. reported scheduling information and QoS information, and UE has to follow the selected transport format. In HSUPA Node B assigns the maximum uplink resource and UE selects accordingly the actual transport format for the data transmissions.

Uplink data transmissions are only allowed to use the time-frequency resources assigned to the UE through the scheduling grant. If the UE does not have a valid grant, it is not allowed to transmit any uplink data. Unlike in HSUPA, where each UE is always allocated a dedicated channel there is only one uplink data channel shared by multiple users (UL SCH) for data transmissions.

To request resources, the UE transmits a resource request message to the Node B. This resources request message could for example contain information on the buffer status, the power status of the UE and some Quality of Services (QoS) related information. This information, which will be referred to as scheduling information, allows Node B to make an appropriate resource allocation. Throughout the document it's assumed that the buffer status is reported for every radio bearer. Of course other configurations for the buffer status reporting are also possible.

Since the scheduling of radio resources is the most important function in a shared channel access network for determining Quality of Service, there are a number of requirements that should be fulfilled by the uplink scheduling scheme for LTE in order to allow for an efficient QoS management (see 3GPP RAN WG#2 Tdoc. R2- R2-062606, "QoS operator requirements/use cases for services sharing the same bearer", by T-Mobile, NTT DoCoMo, Vodafone, Orange, KPN available at http://www.3gpp.org/ftp/tsg_ran/WG2_RL2/TSGR2_54/Documents/ and incorporated herein by reference):

- The UL scheduling scheme for LTE should provide a finer network-based QoS control than what is supported in UMTS Release 6 (HSUPA)
- Starvation of low priority services should be avoided
- Clear QoS differentiation for radio bearers/services should be supported by the scheduling scheme
- The UL reporting should allow fine granular buffer reports (e.g. per radio bearer or per radio bearer group) in order to allow the eNodeB scheduler to identify for which Radio Bearer/service data is to be sent.
- It should be possible to change the priorities used in the UL scheduling decision of the UE dynamically - based on operator requirements
- It should be possible to make clear QoS differentiation between services of different users
- It should be possible to provide a minimum bit-rate per radio bearer

As can be seen from above list one essential aspect of the LTE scheduling scheme is to provide mechanisms with which the operator can control the partitioning of its aggregate cell capacity between the radio bearers of the different QoS classes. The QoS class of a radio bearer is identified by the QoS profile of the corresponding SAE bearer signaled from access gateway to eNodeB as described before. An operator can then allocate a certain amount of its aggregate cell capacity to the aggregate traffic associated with radio bearers of a certain QoS class.

The main goal of employing this class-based approach is to be able to differentiate the treatment of packets depending on the QoS class they belong to. For example, as the load in a cell increases, it should be possible for an operator to handle this by throttling traffic belonging to a low-priority QoS class. At this stage, the high-priority traffic can still experience a low-loaded situation, since the aggregate resources allocated to this traffic is sufficient to serve it. This should be possible in both uplink and downlink direction.

One benefit of employing this approach is to give the operator full control of the policies that govern the partitioning of the bandwidth. For example, one operator's policy could be to, even at extremely high loads, avoid starvation of traffic belonging to its lowest priority QoS Class. The avoidance of starvation of low priority traffic is one of the main requirements for the UL scheduling scheme in LTE. In current UMTS Release 6 (HSUPA) scheduling mechanism the absolute prioritization scheme may lead to starvation of low priority applications. E-TFC selection (Enhanced Transport Format Combination selection) is done only in accordance to absolute logical channel priorities, i.e. the transmission of high priority data is maximized, which means that low priority data is possibly starved by high priority data. In order to avoid starvation the Node B scheduler must have means to control from which radio bearers a UE transmits data. This mainly influences the design and use of the scheduling grants transmitted on the L1/L2 control channel in downlink. In the following the details of the UL rate control procedure in LTE is outlined.

**Uplink Rate Control**

As already mentioned before one of the requirements for LTE uplink scheduling is to avoid a potential starvation of low priorities flows. Therefore a so-called UE centric scheme was adopted, where the UE is responsible for the avoidance of starvation when filling a uplink transport block.

The UE has an uplink rate control function, which manages the sharing of uplink resources between radio bearers. Radio Resource Control (RRC) controls the uplink rate control function by giving each radio bearer a priority and in addition a prioritized bit-rate (PBR). The concept of utilizing a prioritized bit-rate in LTE is new. The idea behind prioritized bit-rate is to support for each bearer, including low priority non-guaranteed bit-rate bearers, a minimum bit-rate in order to avoid a potential starvation. Each bearer should at least get enough resources in order to achieve the prioritized bit-rate. Furthermore, a maximum bit-rate (MBR) per guaranteed bit-rate (GBR) bearer and an aggregated maximum bit-rate (AMBR) for all non- guaranteed bit-rate bearers are also provided to the UE. The MBR denotes bit-rates of traffic per bearer while AMBR denotes a bit-rate of traffic per group of bearers. AMBR applies to all non-guaranteed bit-rate SAE Bearers of a UE.

Guaranteed bit-rate SAE Bearers are outside the scope of AMBR. Multiple SAE Non-guaranteed bit-rate bearers can share the same AMBR. That is, each of those SAE bearers could potentially utilize the entire AMBR, e.g. when the other SAE bearers do not carry any traffic. The AMBR limits the aggregated bit-rate that can be expected to be provided by the Non-GBR SAE bearers sharing the AMBR.

The PBR, MBR and AMBR values signaled to the UE are configured and controlled by the network.

The uplink rate control function ensures that the UE serves its radio bearer(s) in the following sequence:

**Step 1:** All the radio bearer(s) in decreasing priority order up to their PBR;

**Step 2:** All the radio bearer(s) in decreasing priority order for the remaining resources assigned by the grant and the function ensures that the MBR and AMBR are not exceeded.

In case the prioritized bit-rates are all set to zero, the first step is skipped and the radio bearer(s) are served in strict priority order: the UE maximises the transmission of higher priority data. If more than one radio bearer has the same priority, the UE shall serve these radio bearers equally.

**Realization of UE rate control by means of token bucket models**

The implementation of the rate control function residing in the UE could be based on the token bucket model, which is well known in the IP world (see for example 3GPP TS 23.107, "Quality of Service (QoS) concept and architecture (Release 6)", version 6.4.0, Annex B, available at http://www.3gpp.org and incorporated herein by reference). The basic functionality of this model is as follows. Periodically at a given rate a token, which represents the right to transmit a quantity of data (i.e. represents a given number of bits/bytes), is added to the bucket. When the UE is granted resources, it is allowed to transmit data up to the amount represented by the number of tokens in the bucket. When transmitting data the UE removes the number of tokens equivalent to the quantity of transmitted data. In case the bucket is full, any further tokens to be added are discarded.

For the addition of tokens, i.e. the token rate, it may be assumed that the period of the repetition of this process would be every transmission time interval (TTI), but it could be easily lengthened such that a token is only added every second. Basically instead of every 1 ms a token is added to the bucket, 1000 tokens could be added every second. The setting of this periodicity could be for example radio bearer specific. A bearer with a large delay tolerance could work with a large inter-token arrival period, whereas a bearer with a low delay tolerance should rather use a small periodicity of token addition.

As already mentioned in the previous section on uplink rate control, each bearer is assigned a prioritized bit-rate. In addition each guaranteed bit-rate bearer has a maximum bit-rate associated with, which means that each guaranteed bit-rate bearer needs two token buckets, one for prioritized bit-rate and one for maximum bit-rate enforcement. For the non-guaranteed bit-rate bearers only one bucket is required for prioritized bit-rate and one bucket for the group of all non-guaranteed bit-rate bearers is required for the enforcement of the aggregated maximum bit-rate.

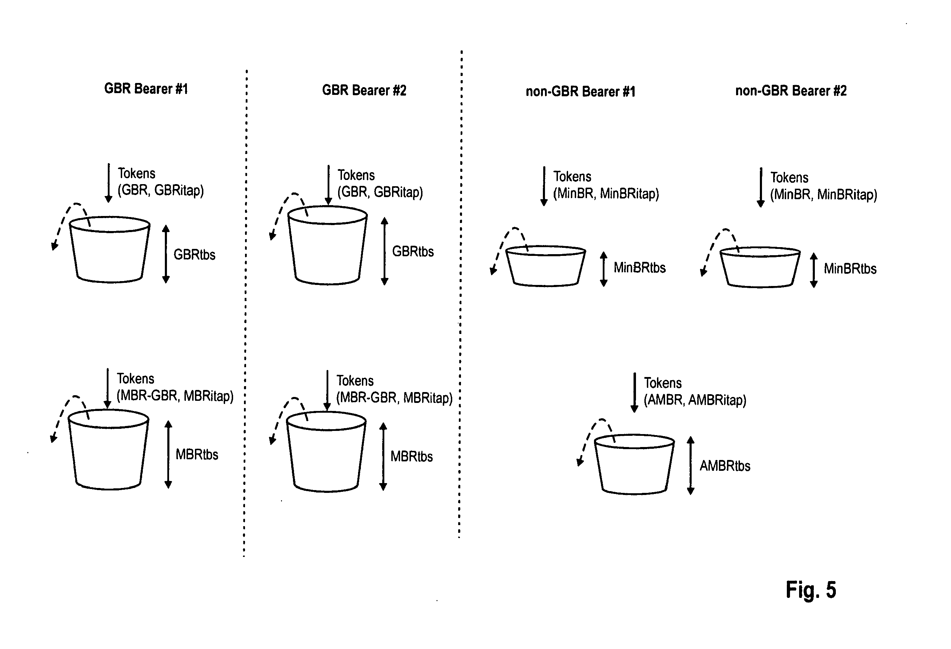

An exemplary token bucket implementation for two guaranteed bit-rate bearers (GBR bearer #1 and GBR bearer #2) and two non-guaranteed bit-rate bearers (non-GBR bearer #1 and non-GBR bearer #2) is shown in Fig. 5. It should be noted that GBR denotes the PRB for GBR bearers and MinBR corresponds to the PRB of Non-GBR bearers. The GBR bucket size is represented by the parameter GBRtbs; MBRtbs corresponds to the bucket size for the MBR token bucket for the GBR bearers. AGBR denotes the aggregated maximum bit-rate for the non-GBR bearers; AMBRtbs the size of the AMBR bucket for the non-GBR bearers. Similarly, MinBRtbs denotes the size of the buckets of the non-GBR bearers.

The bucket size is typically chosen so as to address the allowed burstiness of the outgoing traffic. The fill rate of the bucket, also referred to as inter token arrival period or token rate is denoted by the parameter xitap, e.g. GBRitap denotes the GBRinter-token arrival period.

It should be noted that in case of utilizing two buckets for the guaranteed bit-rate bearers, and allowing a guaranteed bit-rate bearer the transmission of data up to the prioritized bit-rate (see step 1 above), the corresponding number of tokens is removed from the prioritized bit-rate bucket (it should be noted that in Fig. 5 the maximum bit rate-bucket is controlling the data rate between PBR and MBR as expressed by the parameter MBR-PBR, so that the tokens are only removed from the prioritized bit-rate bucket). If data of non-guaranteed bit-rate bearers is transmitted the corresponding number of tokens is removed from the respective prioritized bit-rate bucket and the aggregated maximum bit rate-bucket.

In order to allow for an efficient scheduling by the base station (eNodeB) the mobile terminal (UE) needs to provide information on its status, which is also referred to as Scheduling Information. At least the amount of data, the mobile terminal wants to transmit (also referred to as buffer status) should be reported. This information is required by the base station in order to assign resource properly.

Beside the buffers status also information on the power headroom and QoS information might be included in the scheduling information. The buffer status typically refers to the data that is buffered in the logical channel queues in the UE MAC/RLC layer (carrying data of the respective bearer services).

## SUMMARY OF THE INVENTION

The inventors have recognized that the introduction of an uplink rate control function (including a rate enforcement function/algorithm for example realized by the token bucket algorithm discussed above) to the mobile stations, may lead to an inefficient scheduling in prior-art systems. As conventional scheduling information in particular the information on the buffer status have no relation to status of the rate enforcement function as part of the uplink rate control function at the mobile terminal, such as the bucket status for the enforcement of prioritized bit-rate as well as maximum bit-rate respectively aggregated maximum bit-rate, this might lead to a situation, where mobile terminal reports a certain buffer level, but when it is obtaining an uplink grant in response to the buffer status report (BSR), it is not allowed to fully utilize the granted resource with data of a bearer since this would mean for example exceeding the (aggregated) maximum bit-rate. This situation may be also referred to as a "grant loss" situation. Hence, in case the scheduler bases its decision on the buffer status reports of the mobile terminal, ineffective scheduling decisions may be made at the scheduler.

Accordingly, one object of the invention is to suggest a reporting mechanism for scheduling information that allows the scheduler to avoid "grant loss" situations. Another object is to a reporting mechanism for scheduling information allowing the implementation of an enhanced scheduling function.

At least one of these objects is solved by the subject matter of the independent claims. Advantageous embodiments are subject to the dependent claims.

One aspect of the invention is the suggestion of a new scheme for providing scheduling related information from a mobile terminal to a base station. The base station may for example utilize the scheduling related information for scheduling mobile terminals in its coverage area. It is assumed for exemplary purposes that an uplink rate control function enforcing a maximum bit-rate for the transmission of uplink data, for example by means of a token bucket algorithm, is implemented in the mobile terminal. When signalling the scheduling related information the mobile terminal also considers the status of the rate enforcement algorithm of the uplink rate control function in the scheduling related information.

One embodiment of the invention provides a method for communicating scheduling related information from a mobile terminal to a base station in the radio access network of a mobile communication system. According to this method a mobile terminal determines scheduling information thereby considering the status of an uplink rate control function enforcing a maximum bit-rate for the transmission of uplink data. Further, the mobile terminal may transmit the scheduling information to the base station, which may for example utilize the scheduling information for the scheduling of the mobile station.

In one example, the maximum respectively aggregated maximum bit-rate enforcement is implemented by a token bucket algorithm. By utilizing the token bucket algorithm, the starvation of a radio bearer of the mobile terminal may be avoided.

Moreover, the uplink rate control function may be considered to manage the sharing of scheduled uplink resources between radio bearers of the mobile terminal. The method according to one of claims 1 to 4, wherein the mobile terminal is configured with at least one guaranteed bit-rate bearer and at least one non-guaranteed bit-rate bearer and

wherein the scheduling information comprises the buffer status of a respective guaranteed bit-rate bearer and non-guaranteed bit-rate bearer of the mobile terminal, and the bucket status for non-guaranteed bit-rate bearers enforcing the maximum bit-rate for the transmission of uplink data of the non-guaranteed bit-rate bearers.

In one further example, the scheduling information may comprise or indicate the respective bucket status of a respective guaranteed bit-rate bearer enforcing the maximum bit-rate for the transmission of uplink data of the respective guaranteed bit-rate bearer. The bucket status may be considered as the number of tokens in the bucket reported. Equally, the number of tokens may be converted in a corresponding size of data (in bits/bytes), i.e. the bucket status may also be considered indicating the number of bits/bytes of a bearer (or a group of bearers) that may be transmitted.

In one further embodiment, the scheduling information has an information element for a guaranteed bit-rate bearer of the mobile terminal that indicates the minimum of the buffer status of the guaranteed bit-rate bearer and the bucket status of the token bucket algorithm for the guaranteed bit-rate bearer.

In addition or alternatively, the scheduling information may comprise an information element for a non-guaranteed bit-rate bearer of the mobile terminal that indicates the minimum of the buffer status of the non-guaranteed bit-rate bearer and the bucket status of the token bucket algorithm for the non-guaranteed bit-rate bearers.

In one example, it is assumed that there are $n$ non-guaranteed bit-rate bearer configured for the mobile terminal. The scheduling information comprises a respective information element for each of the $n$ non-guaranteed bit-rate bearers indicating the reported status of the respective non-guaranteed bit-rate bearer $i$ according to the following equation:

$$reported\ status_i = \frac{buffer\ status_i}{\sum_{m=0}^{n} buffer\ status_m} \cdot bucket\ status_{AMBR}$$

wherein $bucket\ status_{AMBR}$ defines a common bucket status shared by the $n$ non-guaranteed bit-rate bearers.

In another embodiment, the scheduling information may only communicate information on radio bearers of the mobile terminal of which the bucket status is non-empty.

According to a further embodiment of the invention the scheduling information comprises only information on radio bearers of the mobile terminal of which the bucket status is smaller than a threshold value.

According to yet another embodiment of the invention, the mobile terminal receives a scheduling grant granting an uplink resource the mobile terminal may utilize for uplink data transmission from the base station. This scheduling grant could be for example scheduling grant received via a L1/L2 control channel from the base station.

The scheduling grant may for example indicate a transport format to be utilized by the mobile terminal for transmitting uplink data. A transport format could for example consist of or comprise a transport block size and a modulation and coding scheme to be used by the mobile terminal for transmitting uplink data.

In a further variation, the scheduling grant and the transport format have been defined by the base station based on the scheduling information transmitted by the mobile terminal.

Moreover, in another variation, the mobile terminal may transmit uplink data of at least one radio bearer to the base station according to a scheduling grant of the base station. For example, the mobile terminal may transmit the uplink data via an uplink channel shared by multiple users, such as the UL SCH in an evolved UMTS i.e. LTE system.

In another embodiment, it is further foreseen that the base station is scheduling mobile terminals including the mobile terminals according to scheduling information received from the mobile terminals.

A further embodiment provides a mobile terminal for communicating scheduling related information to a base station in the radio access network of a mobile communication system. This terminal may comprise a processing unit for determining scheduling information at the mobile terminal, wherein the scheduling information is determined considering the status of an uplink rate control function enforcing a maximum bit-rate for the transmission of uplink data and a transmitter for transmitting the scheduling information from the mobile terminal to the base station.

Moreover, in a variation, the mobile terminal may also comprise a receiver for receiving a scheduling grant from the base station. As mentioned previously, the scheduling grant is granting an uplink resource the mobile terminal may utilize for uplink data transmission.

Another embodiment of the invention relates to a mobile that comprises means for performing the steps of the method for communicating scheduling related information from a mobile terminal to a base station according to one of the various embodiments and variations described herein.

Further, another embodiment of the invention relates to a base station for use in the radio access network of a mobile communication system and for scheduling mobile stations based scheduling related information. This base station comprises a receiver for receiving scheduling information of mobile terminals, wherein the scheduling information comprises information on the status of an uplink rate control function enforcing a maximum bit-rate for the transmission of uplink data at a respective mobile station, and a scheduling unit for scheduling the mobile terminals based on the received scheduling information thereby considering the status of the maximum bit-rate enforcement function.

The scheduling unit may also capable of generating a scheduling grant for a mobile terminal, wherein the scheduling grant is for granting to the mobile terminal a respective uplink resource the mobile terminal may utilize for uplink data transmission. Moreover, the base station could further comprise a transmitter for transmitting the scheduling grant to a mobile terminal. This scheduling grant may fore example indicate a transport format to be utilized by the mobile terminal for transmitting uplink data and the receiver of the base station may receive uplink data according to the indicated transport format from the mobile terminal.

Another embodiment of the invention relates to a mobile communication system comprising a mobile terminal and a base station according to of the various embodiments of the invention described herein.

A further embodiment of the invention relates to a computer-readable medium for use in a mobile terminal. The computer-readable medium stores instructions that, when executed by a processor of a mobile terminal, cause the mobile terminal to communicate scheduling related information to a base station in the radio access network of a mobile communication system. The mobile terminal may be caused to communicate scheduling related information to the base station, by determining scheduling information at the mobile terminal, wherein the scheduling information is determined considering the status of an uplink rate control function enforcing a maximum bit-rate for the transmission of uplink data, and transmitting the scheduling information from the mobile terminal to the base station.

The computer-readable medium according to another embodiment further stores instructions that, when executed by the processor of the mobile terminal, cause the mobile terminal to receive a scheduling grant from the base station. The scheduling grant may be considered granting an uplink resource the mobile terminal may utilize for uplink data transmission.

Another computer-readable medium according to further embodiment of the invention further stored instructions that, when executed by the processor of the mobile terminal, cause the mobile terminal to perform the steps of the method for communicating scheduling related information from a mobile terminal to a base station according to one of the various embodiments and variations described herein.

A further embodiment of the invention relates to a computer-readable medium for use in a base station. This computer-readable medium stores instructions that, when executed by a processor of a base station, cause the base station for use in the radio access network of a mobile communication system to schedule mobile stations based scheduling related information, by receiving scheduling information of mobile terminals, wherein the scheduling information comprises information on the status of an uplink rate control function enforcing a maximum bit-rate for the transmission of uplink data at a respective mobile station, and scheduling the mobile terminals based on the received scheduling information thereby considering the on the status of the uplink rate control function.

The computer-readable medium according to another embodiment further stores instructions that, when executed by the processor of the base station, cause the base station to generate a scheduling grant for a mobile terminal, wherein the scheduling grant is for granting to the mobile terminal a respective uplink resource the mobile terminal may utilize for uplink data transmission, and to transmit the scheduling grant to a mobile terminal.

In another variation, the computer-readable medium further stores instructions that, when executed by the processor of the base station, cause the base station to receive uplink data according to the indicated transport format from the mobile terminal.

## BRIEF DESCRIPTION OF THE FIGURES

In the following the invention is described in more detail in reference to the attached figures and drawings. Similar or corresponding details in the figures are marked with the same reference numerals.

Fig. 1          shows an exemplary network architecture of a SAE/LTE communication system, in which the invention may be utilized,

Fig. 2          shows an exemplary SAE Bearer Architecture,

Fig. 3 and 4    show an exemplary localized allocation and distributed allocation of the uplink bandwidth in a single carrier FDMA scheme,

**Fig. 5**       shows an exemplary toke buffer configuration, and

**Fig. 6**       shows an exemplary signaling flow for scheduling a mobile terminal (UE) by a scheduler in the base station (eNodeB) in response to a resource request from the mobile terminal according to an exemplary embodiment of the invention.

## DETAILED DESCRIPTION OF THE INVENTION

The following paragraphs will describe various embodiments of the invention. For exemplary purposes only, most of the embodiments are outlined in relation to an orthogonal single-carrier uplink radio access scheme according to the SAE/LTE discussed in the Technical Background section above. It should be noted that the invention may be advantageously used for example in connection with a mobile communication system such as the SAE/LTE communication system previously described, but the invention is not limited to its use in this particular exemplary communication network.

The explanations given in the Technical Background section above are intended to better understand the mostly SAE/LTE specific exemplary embodiments described herein and should not be understood as limiting the invention to the described specific implementations of processes and functions in the mobile communication network. Nevertheless, the improvements proposed herein may be readily applied in the architectures/systems described in the Technical Background section and may in some embodiments of the invention also make use of standard and improved procedures of theses architectures/systems.

One aspect of the invention is the suggestion of a new scheme for providing scheduling related information from a mobile terminal to a base station. The scheduling related information may for example be comprised in a resource request of the mobile terminal that is requesting the base station to allocate a resource to the mobile terminal for uplink transmission. The base station may utilize the scheduling related information for scheduling mobile terminals in its coverage area. It is assumed for exemplary purposes that an uplink rate control function enforcing a maximum bit-rate for the transmission of uplink data, for example by means of a token bucket algorithm, is implemented in the mobile terminal. The scheduling related information should give the scheduler at the base station an indication whether to assign transmission opportunities to the respective scheduled mobile terminal in view of rate enforcement. Therefore, when signalling the scheduling related information the mobile terminal also considers the status of the rate enforcement functionality in the uplink rate control function in the scheduling related information to provide such indication.

For example, in one embodiment of the invention, the mobile terminal may yield status information of the rate enforcement algorithm in the uplink rate control function to the scheduler by means of its scheduling related information. In principle, this may be for example realized by indicating additional information on the status of the rate enforcement functionality in scheduling related information transmitted by the mobile terminal or alternatively, by including either the status of the rate enforcement functionality or the buffer status to the scheduler, depending on which status should be decisive for the scheduling decision. Generally, the status of the rate enforcement algorithm should indicate to the scheduler (in the base station) the amount of data a mobile terminal is allowed to transmit for a given bearer service in view of its rate enforcement.

If implementing the rate enforcement functionality (for example for the purpose of avoiding the starvation of individual bearer services) by means of a token bucket algorithm, the mobile terminal may for example also report the bucket status for a respective bearer in addition to the buffer status of the bearer when sending scheduling information. The bucket status may be for example the number of tokens of the respective bucket of the bearer or alternatively a number of bits/bytes of the bearer associated to the bucket the mobile terminal is allowed to send according to the uplink rate control algorithm.

The buffer status may for example indicate the number of bits/bytes of the bearer currently buffered in the transmission buffers, e.g. transmission buffers at RLC/MAC layer to which the radio bearer services are mapped, at the reporting mobile terminal. Beside the buffers status and/or the bucket status the scheduling related information may also comprise further information relevant for the scheduler's scheduling decisions, such as the power headroom of a mobile terminal or some QoS related information of the respective bearer(s) configured at the mobile terminal.

Though the following embodiments of the invention will mainly refer to the token bucket algorithm for implementing an rate enforcement functionality as part of the uplink rate function at the mobile terminals (e.g. to avoid the starvation of individual bearer services), it should be noted that also other rate control mechanisms may be foreseen at the mobile terminal.

When employing an uplink rate control algorithm at the mobile terminal, individual buffer status reports for the (guaranteed bit-rate and/or non-guaranteed bit-rate) bearers of the mobile terminal alone do not consider the restrictions set by the uplink rate control algorithm with respect to the rate enforcement functionality. For example, the base station receiving the buffer reports would not be aware of whether the maximum bit-rate respectively aggregated maximum bit-rate enforcement at the mobile terminal would actually allow for the transmission of uplink data of a respective bearer services even if the base station would assign an uplink resource to the mobile terminal. Therefore situations might occur where the resources assigned by the base station in accordance to the reported buffer status cannot be fully used by the mobile terminal due to the limitations given by the rate control algorithm, i.e. bucket status when utilizing an token bucket algorithm for rate control.

As an example one could assume a LTE communication system as outlined in the Technical Background section wherein a mobile terminal is configured with guaranteed bit-rate and/or non-guaranteed bit-rate bearers. Further, it may be assumed in this example that a certain SAE bearer has been scheduled quite frequently in the recent past and correspondingly the associated MBR or AMBR bucket is empty. Still there might be a significant amount of data in the buffer, e.g. the non-guaranteed bit-rate bearer carries data of an FTP (File Transfer Protocol) application. When mobile terminal reports in this situation a non-empty buffer status and the base station assigns resources to this service according to the buffer status report, then a situation would occur, where mobile terminal cannot use this grant, which is also referred to as "grant loss" situation. Since the assigned resources are not used by the mobile terminal, the system throughput is degraded.

As indicated above, one possible solution for this problem according to one exemplary embodiment of the invention is the mobile considering the status of the token bucket algorithms for controlling the maximum respectively aggregated maximum bit-rate when reporting the buffer status. Essentially the scheduler which resides in the base station needs to also take into account the maximum bit-rate/aggregated maximum bit-rate enforcement status of the radio bearers when assigning resources to the mobile terminal in its service area/radio cell. There are basically different ways how a scheduler is provided such information. As a simple general mechanism mobile terminal could report in addition to the buffer status also the bucket status, i.e. amount of tokens (allowed resources) in the bucket, for corresponding radio bearers. This would provide the scheduler a full picture on mobile terminal's situation and allow for an appropriate resource assignment. Obviously the required signaling overhead is increased by this solution, however it should be kept in mind, that Scheduling information, which is used as a resource request, is transmitted by MAC control signaling. Therefore the overhead increase is fairly reasonable in light of the achieved efficiency increase for the uplink scheduling.

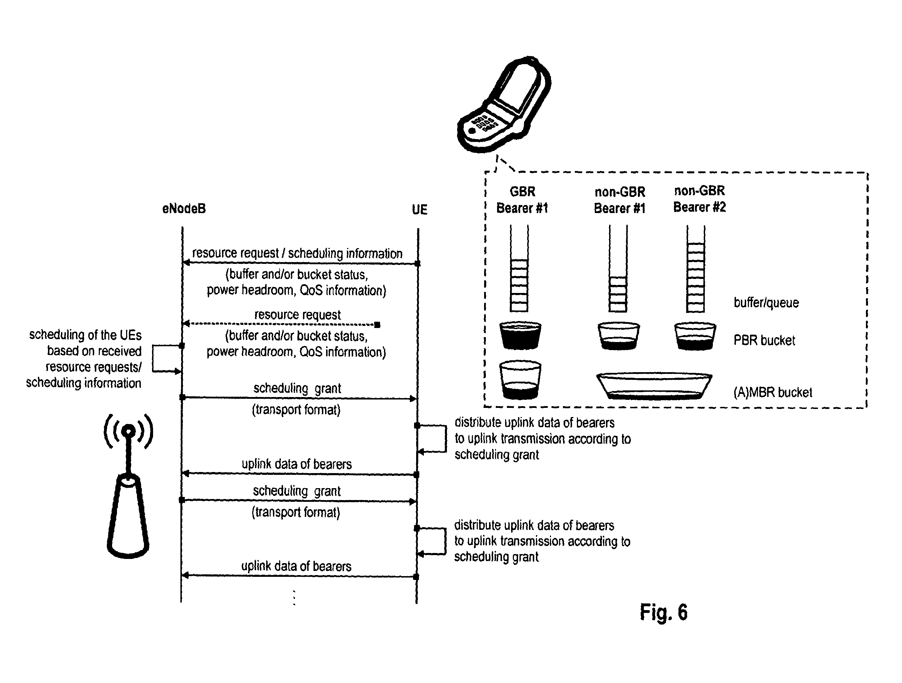

Fig. 6 shows an exemplary signaling flow for scheduling a mobile terminal (UE) by a scheduler in the base station (eNodeB) in response to a resource request from the mobile terminal according to an exemplary embodiment of the invention. For exemplary purposes, it is assumed that the mobile terminal and the base station belong to an SAE/LTE communication system as exemplified in Fig. 1.

The mobile terminal may be further assumed to implement an uplink rate control function for control of the uplink rate of its bearer services to the access network. In the example, the mobile terminal is assumed to be configured with one guaranteed bit-rate bearer and two non-guaranteed bit-rate bearers. Furthermore, implementation of prioritized and maximum respectively aggregated maximum bit rate in the uplink rate control function is realized by a token bucket algorithm as described with respect to Fig. 5 above.

For example periodically (e.g. each TTI, every N TTIs) and/or event triggered (e.g. upon new data being entered into the buffer of a bearer service, upon a scheduling grant becoming invalid, a long as any buffer of a bearer contains data) the mobile terminal may transmit a scheduling information for example comprised within a resource request message to the base station comprising the scheduler. The scheduling information/resource request may for example be signaled via MAC signaling or on a contention based control channel to the base station.

In this embodiment, the scheduling information may include the buffer status of the individual bearer services (i.e. the respective buffer status of the guaranteed bit-rate (radio) bearer and two non-guaranteed bit-rate (radio) bearers configured at the mobile terminal) but also the respective bucket status for the respective bearers. Optionally, further information such as the mobile terminals power headroom or QoS related information on the respective bearer services may be included in the scheduling information.

The buffer status may be for example indicating the number of bits/bytes queued in the (transmission) buffer (or queue) in the mobile terminals MAC (Medium Access Control) respectively RLC (Radio Link Control) or PDCP (Packet Data Convergence Protocol) layer, wherein the data units of a single bearer service may be mapped to exactly one buffer at the mobile terminal. In this embodiment, the buffer status of all bearer services - guaranteed and non-guaranteed bit-rate - may be included in the scheduling information.

The bucket status of the bearers may for example report the total number of tokens a respective bearer service has available for transmission. For guaranteed bit-rate bearers this means that the bucket status indicates the number of tokens available in the maximum bit-rate bucket. Alternatively the bucket status for guaranteed bit-rate bearers could indicate the number of tokens available in the prioritized bit rate bucket and the maximum bit rate bucket or any combination thereof.

For the non-guaranteed bit-rate bearers the bucket status may be for example indicated by the number of tokens available in the aggregated maximum bit-rate bucket for all non-guaranteed bit-rate bearers configured at the terminal. Alternatively the bucket status for non-guaranteed bit-rate bearers could indicate the number of tokens available in the prioritized bit rate bucket and the aggregated maximum bit rate bucket or any combination thereof.

Alternatively, the number of tokens may also be expressed in a number of bits/bytes of uplink data the mobile terminal is allowed to transmit out of a respective buffer of a bearer. If for example a token corresponds to 100 bytes and there are in total 400 tokens in the prioritized bit-rate bucket and the maximum bit-rate bucket of a guaranteed bit-rate bearer, the bucket status of the respective bearer may be indicated by indicating either the 400 tokens or a data quantity of 40kbytes in the scheduling information.

As indicated in Fig. 6, the base station comprising the scheduler will receive resource requests (which may be also referred to as scheduling requests or rate requests) including the scheduling information from different mobile terminals in its service area. The scheduler may for example periodically make a scheduling decision allocating the total available uplink resources/power for user data transmission to the requesting mobile terminals. Further, in this scheduling decision the scheduler may also determine the transport formats to be used for the transmission of uplink data by the respective mobile terminals. The transport format may for example comprise a modulation and coding scheme to be applied to the uplink data and the transport block size of the transport block to which the uplink data should be mapped by the individual mobile terminals. These parameters allow the mobile terminals to derive the number of bits/bytes they are allowed to transmit on the uplink.

Further, the base station may indicate its scheduling decision to the mobile terminals by means of scheduling grants (which may also be referred to as resource grants or rate grants). These scheduling grants may for example be signaled to the mobile terminals via a L1/L2 control channel as outlined in the Technical Background section.

In this embodiment, it may be assumed that the scheduling grants are only valid for the transmission of one Transport Block, i.e. one MAC PDU in the non-MIMO mode. Consequently the scheduling grant would be only valid for one transmission opportunity, i.e. one Transmission Time Interval (TTI). Alternatively, it may also be foreseen that the validity of the scheduling grants is longer than one transmission opportunity, e.g. one TTII, e.g. 2 or 3 TTIs, or the validity period may be indicated to the respective mobile terminals within the scheduling grants. Further, the validity period may be equal for all scheduling grants or may be set individually per scheduling grant.

Upon receiving the scheduling grant the mobile terminal may distribute the indicated resource to its guaranteed and non-guaranteed bit-rate bearers as follows. The amount of bits/bytes the mobile terminal distributes among its configured radio bearers is indicated by means of the transport block size. The transport block size in connection with used modulation and coding scheme determines the amount of physical channel resource (e.g. the number of OFDM symbols to use in the transmission being equivalent to a bit-rate on the physical channel).

Further, the mobile terminal may move from bearer to bearer (queue to queue) and assign a part of the granted resource to the respective bearer. The assignment of the grant to the bearers is basically performed in two steps as already mentioned in the Technical Background section.

In a first step, the mobile terminal determined for each bearer the minimum of the buffer status and the bucket status of the prioritized bit-rate bucket, i.e. determines the amount of bits/bytes of the respective bearer that may be transmitted either due to the prioritized bit-rate restriction of the token buffer algorithm for the bearer or due to the bearer's buffer size. If this determined amount of data is smaller than the grant of the base station, the base station assigns a part of the grant equal to the determined amount of bits/bytes of the respective bearer that may be transmitted to the respective bearer and processes the next bearer until the grant is fully assigned to the bearers or until the all bearers have been assigned a part of the granted resource.

If during this first step, the grant or remaining part of the grant is smaller than the amount of bits/bytes of the currently processed bearer that may be transmitted either due to the prioritized bit-rate restriction of the token buffer algorithm, the grant or remaining part of the grant is assigned to the bearer.

Further, the buffer status and bucket status is updated accordingly by removing the assigned data of the respective bearers from the buffers and by removing the adequate number of tokens equivalent to the amount of data to be sent of the respective bearers in the prioritized bit-rate buckets, the maximum bit-rate bucket(s) and the aggregated maximum bit-rate buckets.

Concerning the serve order of the bearers in this first step, guaranteed bit-rate bearers may be served first. Alternatively, all bearers may be assigned a priority (e.g. a logical channel priority of the logical channel to which a respective bearer service or bearer services is/are mapped) and the bearers may be served according to their priority in descending order. Thereby, guaranteed bit-rate bearers should typically have a priority higher than that of non-guaranteed bit-rate bearers.

If there is still a part of the granted resource unused after having served all bearers up to the amount of data defined by their respective prioritized bit-rate bucket or buffer status, the mobile terminal may enter a second allocation step, where the remaining grant is distributed to the bearers in a similar fashion as in the above described first step.

Instead of considering the prioritized bit-rate buckets of the bearers, the mobile terminal may now utilize the minimum of the buffer status of the respective bearer (or rather the remaining buffer size after the first assignment step) and the status of the bearer's maximum bit-rate bucket and may assign a part of the remaining grant to the respective bearer for the guaranteed bit-rate bearers.

For the non-guaranteed bit-rate bearers the mobile terminal may determine the minimum of the respective bearer's buffer status (size) and the number of tokens of the aggregated maximum bit-rate bucket assigned to the considered non-guaranteed bit-rate bearer.

As only one aggregated maximum bit-rate bucket may be maintained for all non-guaranteed bit-rate bearers the mobile terminal may utilize a distribution rule for distributing the tokens of the aggregated maximum bit-rate bucket to the respective non-guaranteed bit-rate bearers (e.g. by simply dividing the number of tokens by the number of non-guaranteed bit-rate bearers, based on the priorities of the non-guaranteed bit-rate bearers, considering the buffer status of the respective bearers - i.e. a bearer with more data in the buffer than another bearer is assigned more tokens of the aggregated maximum bit-rate bucket than the other bearer). Again, also in this second step, the mobile terminal may serve the different bearers in a predetermined serve order as described above.

Of course the scheduler should avoid granting more resources than needed to transmit all uplink data in the buffers of the bearers configured at the mobile terminal or than the mobile terminal may actually transmit due to the token buffer algorithm that is enforcing the uplink rate control. However, due to the extended signalling information that allows the scheduler to identify how much data that respective mobile terminals can actually send, the scheduler may make an appropriate scheduling decision and may ensure that all granted resources can actually be fully utilized by the mobile terminals.

Once the mobile terminal has completed the process of assigning the resources to the different bearers, it may generate the uplink transmission (e.g. in form of a MAC protocol data unit (PDU) conveying the multiplexed data of the different bearers) and may transmit the data to the base station, for example via a shared uplink channel (UL-SCH).

The following tables exemplarily illustrates the assignment of the granted resources to one guaranteed bit-rate bearer (GBR bearer #1) and two non-guaranteed bit-rate bearers (non-GBR bearer #1 and non-GBR bearer #2)according to the two-step procedure described above for a scheduling grant of 100bytes. The following table illustrates the first step of the assignment algorithm:

| Bearer Service | Buffer Status | PBR Bucket Status | Assigned Resource | Remaining Grant |
|---|---|---|---|---|
| GBR bearer #1 | 70 byte | 40 byte | 40 byte | 60 byte |
| Non-GBR bearer #1 | 20 byte | 10 byte | 10 byte | 50 byte |
| Non-GBR bearer #2 | 10 byte | 20 byte | 10 byte | 40 byte |

After this first step, still 40 bytes of the grant are unused. The MBR bucket status of the GBR bearer #1 and the AMBR bucket status for non-GBR bearer #1 and non-GBR bearer #2 are updated, i.e. by removing the number of tokens equivalent to the assigned 40 bytes for GBR bearer #1 and 20 bytes (10 bytes + 10 bytes) for non-GBR bearer #1 and non-GBR bearer #2.

Accordingly, the exemplary second step of the resource assignment could look like follows:

| Bearer Service | Updated Buffer Status | MBR Bucket Status | AMBR Bucket Status | Assigned Resource | Remaining Grant |
|---|---|---|---|---|---|
| GBR bearer #1 | 30 byte | 50 bytes | | 30 byte | 10 byte |
| Non-GBR bearer #1 | 10 byte | | 30 byte | 10 byte | - byte |
| Non-GBR bearer #2 | - byte | | 20 byte | - byte | - byte |

Accordingly, a total of 70 bytes of GBR bearer #1, 20 bytes of non-GBR bearer #1 and 10 bytes of non-GBR bearer #2 would be transmitted in the uplink transmission by the mobile terminal.

Considering a token bucket algorithm utilizing two buckets, PBR bucket and MBR bucket one possible implementation may be that the MBR bucket status actually indicates the difference between the maximum bit-rate (MBR) and the prioritized bit-rate (PBR). Hence, in the exemplary implementation as shown in the tables above, the maximum bit-rate of GBR bearer #1 would be 90 bytes (40 bytes + 50 bytes).

Further, for exemplary purposes, the serve order of the bearer services in the tables above may be assumed to correspond to the priority order of the bearer services, i.e. priority(GBR bearer #1) > priority(non-GBR bearer #1) > priority(non-GBR bearer #1).

As indicated above, it may be assumed that a scheduling grant is for example only valid for a certain validity period (e.g. one or more transmission time intervals). Accordingly, the mobile terminals would need to transmit a new resource request once the current scheduling grant should become invalid. In a further embodiment, however, such resource requests may be omitted, if the scheduling information of the last resource request of a mobile terminal has indicated an amount of uplink data that could be transmitted by the mobile terminal (taking into account buffer status and bucket status) is larger than the amount of data granted for transmission within the validity period of the scheduling grant. Based on the scheduling information of the mobile terminal the scheduling base station is aware that the mobile terminal still has data to send, and may thus autonomously transmit a new scheduling grant to the mobile terminal, as indicated in Fig. 6. However, if the buffer status of a bearer (e.g. due to the burstiness of the transported data) has changed significantly the mobile terminal may nevertheless send a resource request with new (up-to-date) scheduling information to the base station. It should be noted that the base station may be aware of the bucket status of guaranteed bit-rate bearers of the mobile terminals due to their more predictable behaviour, e.g. the traffic of GBR bearers is in general not bursty but rather of constant rate.

As the scheduling frequency may be high (up to one TTI) the transmission of scheduling information may impose a significant overhead, especially if communicating both, buffer status and bucket status on a per-bearer basis. In order to save signaling overhead, the buffer status information and the bucket status information may be encoded, e.g. by only indicating the buffer status in predefined ranges of bytes / tokens:. Alternatively the buffer respectively bucket status could indicate the amount of data/token relative to the highest value of the buffer/bucket size range. Consequently the percentage representation could be also done in preconfigured intervals.

Another possibility to reduce this additional overhead may be that the mobile terminal only reports the bucket status for non-guaranteed bit-rate bearers. In this alternative the scheduling information would only contain the status of the aggregated maximum bit-rate bucket in addition to the buffer status reports of the configured radio bearers, since all non-guaranteed bit-rate bearers share the same aggregated maximum bit-rate. Alternatively also the status of the Prioritized bit rate buckets of the non-guaranteed bit-rate bearers could be reported. Furthermore this optimization would take advantage of the characteristics of guaranteed bit-rate traffic. In general the traffic of guaranteed bit-rate bearers is quite predictable and mostly likely not bursty. Therefore the likelihood of a "grant loss" situation under the assumption that bucket status is not reported for guaranteed bit-rate bearers is rather low compared to non-guaranteed bit-rate bearers. Essentially the more bursty traffic is, the more likely is the occurrence of a "grant loss" situation.

Considering the functionality of a token bucket algorithm in order to enforce maximum bit-rate or aggregated maximum bit-rate a mobile is never allowed to transmit more data of a bearer than the minimum of buffer status and bucket status as exemplarily outlined above with respect to Fig. 6. The minimum would be the maximum allowed data size for transmission, which is obviously further limited by the assigned grant size. Therefore another alternative to reduce the signaling overhead of the scheduling information while still taking into account the status of the token bucket algorithm may be that the mobile terminals only report the minimum of buffer status and bucket status (as for example defined above) in the scheduling information instead of buffer status. By this approach it can be guaranteed that the base station assigns never more uplink resources than the mobile terminal is allowed to use due to maximum bit-rate/ aggregated maximum bit-rate restrictions. This solution may be for example particularly suitable for guaranteed bit-rate-bearers, since each guaranteed bit-rate bearer has a separate maximum bit-rate configured.

However as already mentioned all non-guaranteed bit-rate bearers share the same aggregated maximum bit-rate. Therefore in case the sum of data in the queues for all Non-guaranteed bit-rate bearers is larger than the aggregated maximum bit-rate status, the mobile terminal would need to calculate the reported status for a non-guaranteed bit-rate bearer as the ratio of buffer status of the radio bearer to the sum of all non-guaranteed bit-rate bearer buffer status times the aggregated maximum bit-rate bucket status as shown in the equation below.

$$reported\ status_i = \frac{buffer\ status_i}{\sum_{m=0}^{n} buffer\ status_m} \cdot bucket\ status_{AMBR}$$

In an exemplary scenario there are three non-guaranteed bit-rate bearers configured in the mobile. At the time when mobile terminal makes a resource request the buffer status of the bearers are as follows: buffer status of bearer 1 is 200 byte, buffer status of bearer 2 is 300 byte and buffer status of bearer 3 is 100 byte. The aggregated maximum bit-rate bucket status is 200 byte. In this case the mobile terminal would report to the base station the following status reports:

- Bearer 1: 200/600 * 200= 66,667byte

- Bearer 2: 300/600 * 200= 100byte

- Bearer 3: 100/600 * 200= 33.33byte

Another embodiment of the invention provides another alternative solution for the avoidance of "grant loss" scenarios by means of the definition of new rules for the buffer status reporting for the mobile terminal. For example the mobile terminal may be only be allowed to send buffer status reports (i.e. a resource request together with scheduling information) to the base station for a radio bearer or group of radio bearer(s) in case the associated bucket status is non-empty, i.e. there is at least one token in the corresponding bucket(s). It's however obvious that by such a simple rule still there would be situations where base station assigns more resources to a mobile terminal, than the mobile terminal can use due to maximum bit-rate/aggregated maximum bit-rate restrictions.

Consequently another embodiment of the invention suggests defining a rule which prevents the mobile terminal to send a buffer status report for a radio bearer or group of radio bearer(s) when the corresponding bucket status is smaller than the buffer status or below a threshold value. The threshold value could be configured and sent from the network, i.e. base station. The configuration may be realized by RRC signaling, e.g. the threshold value could be communicated to the mobile station in RRC signaling messages. This rule would avoid potential "grant loss" scenarios completely; however it would obviously also restrict the scheduling mechanism by preventing the mobile terminal to send resource requests (scheduling information) when a bucket is non-empty. Generally this sort of optimization is very easy to implement but on the downside it doesn't provide base station as precise information as the other embodiments.

Another embodiment of the invention relates to the implementation of the above described various embodiments using hardware and software. It is recognized that the various embodiments of the invention may be implemented or performed using computing devices (processors). A computing device or processor may for example be general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

It should be further noted that the individual features of the different embodiments of the invention may individually or in arbitrary combination be subject matter to another invention.

It would be appreciated by a person skilled in the art that numerous variations and/or modifications may be made to the present invention as shown in the specific embodiments without departing from the spirit or scope of the invention as broadly described. The present embodiments are, therefore, to be considered in all respects to be illustrative and not restrictive.

**Claims**

1. A method for communicating scheduling related information from a mobile terminal to a base station in the radio access network of a mobile communication system, the method comprising the step of:

   determining scheduling information at the mobile terminal, wherein the scheduling information is determined considering the status of an uplink rate control function enforcing a maximum bit-rate for the transmission of uplink data, and
   transmitting the scheduling information from the mobile terminal to the base station, wherein the scheduling information is used for the scheduling of the mobile station by the base station.

2. The method according to claim 1, wherein the maximum bit-rate enforcement is implemented by a token bucket algorithm.

3. The method according to claim 1 or 2, wherein the uplink rate control function manages the sharing of scheduled uplink resources between radio bearers of the mobile terminal.

4. The method according to claim 2 or 3, wherein the token bucket algorithm is for avoiding the starvation of a radio bearer.

5. The method according to one of claims 1 to 4, wherein the mobile terminal is configured with at least one guaranteed bit-rate bearer and at least one non-guaranteed bit-rate bearer and
   wherein the scheduling information comprises the buffer status of a respective guaranteed bit-rate bearer and non-guaranteed bit-rate bearer of the mobile terminal, and the bucket status for non-guaranteed bit-rate bearers enforcing the maximum bit-rate for the transmission of uplink data of the non-guaranteed bit-rate bearers.

**6.** The method according to claim 5, wherein the scheduling information further comprises the respective bucket status of a respective guaranteed bit-rate bearer enforcing the maximum bit-rate for the transmission of uplink data of the respective guaranteed bit-rate bearer.

**7.** The method according to one of claims 1 to 4, wherein the scheduling information comprises an information element for a guaranteed bit-rate bearer of the mobile terminal that indicates the minimum of the buffer status of the guaranteed bit-rate bearer and the bucket status of the token bucket algorithm for the guaranteed bit-rate bearer.

**8.** The method according to one of claims 1 to 4 or claim 7, the scheduling information comprises an information element for a non-guaranteed bit-rate bearer of the mobile terminal that indicates the minimum of the buffer status of the non-guaranteed bit-rate bearer and the bucket status of the token bucket algorithm for the non-guaranteed bit-rate bearers.

**9.** The method according to claim 8, wherein there are n non-guaranteed bit-rate bearer configured for the mobile terminal and the scheduling information comprises a respective information element for each of the n non-guaranteed bit-rate bearers indicating the reported status of the respective non-guaranteed bit-rate bearer i according to the following equation:

$$reported\ status_i = \frac{buffer\ status_i}{\sum_{m=0}^{n} buffer\ status_m} \cdot bucket\ status_{AMBR}$$

wherein $bucket\ status_{AMBR}$ defines a common bucket status shared by the n non-guaranteed bit-rate bearers.

**10.** The method according to one of claims 1 to 9, wherein the scheduling information comprises only information on radio bearers of the mobile terminal of which the bucket status is non-empty.

**11.** The method according to one of claims 1 to 10, wherein the scheduling information comprises only information on radio bearers of the mobile terminal of which the bucket status is smaller than a threshold value.

**12.** The method according to one of claims 1 to 11, further comprising the step of receiving from the base station at the mobile terminal a scheduling grant granting an uplink resource the mobile terminal may utilize for uplink data transmission.

**13.** The method according to claim 12, wherein the scheduling grant is received via a L1/L2 control channel.

**14.** The method according to on of claims 1 to 13, wherein the scheduling grant indicates a transport format to be utilized by the mobile terminal for transmitting uplink data.

**15.** The method according to claim 15, wherein the transport format indicates a transport block size and a modulation and coding scheme to be used by the mobile terminal for transmitting uplink data.

**16.** The method according to one of claims 12 to 15, wherein the scheduling grant and the transport format have been defined by the base station based on the scheduling information transmitted by the mobile terminal.

**17.** The method according to one of claims 1 to 16, further comprising the step of transmitting by the mobile terminal uplink data of at least one radio bearer to the base station according to a scheduling grant of the base station.

**18.** The method according to claim 17, wherein the uplink data is transmitted via an uplink channel shared by multiple users.

**19.** The method according to one of claims 1 to 18, further comprising the step of scheduling by the base station mobile terminals including the mobile terminals according to scheduling information received from the mobile terminals.

**20.** A mobile terminal for communicating scheduling related information to a base station in the radio access network of a mobile communication system, the mobile terminal comprising:

a processing unit for determining scheduling information at the mobile terminal, wherein the scheduling information is determined considering the status of an uplink rate control function enforcing a maximum bit-rate for the transmission of uplink data , and
a transmitter for transmitting the scheduling information from the mobile terminal to the base station.

**21.** The mobile terminal according to claim 20, further comprising a receiver for receiving a scheduling grant from the base station, wherein the scheduling grant is granting an uplink resource the mobile terminal may utilize for uplink data transmission.

**22.** The mobile terminal according to claim 20 or 21, further comprising means for performing the steps of the method according to one of claims 2 to 18.

**23.** A base station for use in the radio access network of a mobile communication system and for scheduling mobile stations based scheduling related information, the base station comprising:

a receiver for receiving scheduling information of mobile terminals, wherein the scheduling information comprises information on the status of an uplink rate control function enforcing a maximum bit-rate for the transmission of uplink data at a respective mobile station, and
a scheduling unit for scheduling the mobile terminals based on the received scheduling information thereby considering the status of the maximum bit-rate enforcement function.

**24.** The base station according to claim 23, wherein the scheduling unit is adapted to generate a scheduling grant for a mobile terminal, wherein the scheduling grant is for granting to the mobile terminal a respective uplink resource the mobile terminal may utilize for uplink data transmission, and
the base station further comprises a transmitter for transmitting the scheduling grant to a mobile terminal.

**25.** The base station according to claim 23 or 24, wherein the scheduling grant indicates a transport format to be utilized by the mobile terminal for transmitting uplink data and
the receiver is adapted to receive uplink data according to the indicated transport format from the mobile terminal.

**26.** A mobile communication system comprising a mobile terminal according to one of claims 20 to 22 and a base station according to one of claims 23 to 25.

**27.** A computer-readable medium storing instructions that, when executed by a processor of a mobile terminal, cause the mobile terminal to communicate scheduling related information to a base station in the radio access network of a mobile communication system, by:

determining scheduling information at the mobile terminal, wherein the scheduling information is determined considering the status of an uplink rate control function enforcing a maximum bit-rate for the transmission of uplink data, and
transmitting the scheduling information from the mobile terminal to the base station.

**28.** The computer-readable medium according to claim 27, further storing instructions that, when executed by the processor of the mobile terminal, cause the mobile terminal to receive a scheduling grant from the base station, wherein the scheduling grant is granting an uplink resource the mobile terminal may utilize for uplink data transmission.

**29.** The computer-readable medium according to claim 27 or 28, further storing instructions that, when executed by the processor of the mobile terminal, cause the mobile terminal to perform the steps of the method according to one of claims 2 to 18.

**30.** A computer-readable medium storing instructions that, when executed by a processor of a base station, cause the base station for use in the radio access network of a mobile communication system to schedule mobile stations based scheduling related information, by:

receiving scheduling information of mobile terminals, wherein the scheduling information comprises information on the status of an uplink rate control function enforcing a maximum bit-rate for the transmission of uplink data at a respective mobile station, and
scheduling the mobile terminals based on the received scheduling information thereby considering the on the status of the uplink rate control function.

31. The computer-readable medium according to claim 30, further storing instructions that, when executed by the processor of the base station, cause the base station to generate a scheduling grant for a mobile terminal, wherein the scheduling grant is for granting to the mobile terminal a respective uplink resource the mobile terminal may utilize for uplink data transmission, and to transmit the scheduling grant to a mobile terminal.

32. The computer-readable medium according to claim 30 or 31, wherein the scheduling grant indicates a transport format to be utilized by the mobile terminal for transmitting uplink data and
wherein the computer-readable medium, further stores instructions that, when executed by the processor of the base station, cause the base station to receive uplink data according to the indicated transport format from the mobile terminal.

Internet /
Packet-Switched Network(s)

core network

aGW

other 3GPP System(s)

non-3GPP System(s)

S1 interface

S1 interface

S1 interface

radio access network

eNode B

eNode B

eNode B

X2 interface

radio cell

radio cell

radio cell

radio cell

Fig. 1

EP 1 986 455 A1

Fig. 2

Physical Channel Mapping

$T_{subframe}=0.5$ ms

$BW_{grant}$

system bandwidth

**Fig. 3**

Physical Channel Mapping

$BW_{grant}=M\,BW_{subcarrier}$

$T_{subframe}=0.5$ ms

$BW_{subcarrier}$

system bandwidth

**Fig. 4**

GBR Bearer #1

Tokens
(GBR, GBRitap)

GBRtbs

Tokens
(MBR-GBR, MBRitap)

MBRtbs

GBR Bearer #2

Tokens
(GBR, GBRitap)

GBRtbs

Tokens
(MBR-GBR, MBRitap)

MBRtbs

non-GBR Bearer #1

Tokens
(MinBR, MinBRitap)

MinBRtbs

Tokens
(AMBR, AMBRitap)

AMBRtbs

non-GBR Bearer #2

Tokens
(MinBR, MinBRitap)

MinBRtbs

Fig. 5

EP 1 986 455 A1

Fig. 6

European Patent Office

**EUROPEAN SEARCH REPORT**

Application Number

EP 07 00 8708

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/043782 A (SAMSUNG ELECTRONICS CO LTD [KR]) 27 April 2006 (2006-04-27) | 1,20,23, 26,27,30 | INV. H04Q7/38 |
| Y | * page 3, line 19 - page 7, line 3 * | 2-19,21, 22,24, 25,28, 29,31,32 | |
| | * page 8, line 9 - line 18 * * figures 3,4 * ----- | | |
| X | US 2005/281219 A1 (KIM YOUNG-BUM [KR] ET AL) 22 December 2005 (2005-12-22) | 1,20,23, 26,27,30 | |
| A | * page 1, paragraph 13 - page 2, paragraph 17 * | 2-19,21, 22,24, 25,28, 29,31,32 | |
| | * page 4, paragraph 45 - page 5, paragraph 65 * * figures 2-4 * ----- | | |
| Y | US 2007/070908 A1 (GHOSH DONNA [US] ET AL) 29 March 2007 (2007-03-29) | 2-19,21, 22,24, 25,28, 29,31,32 | TECHNICAL FIELDS SEARCHED (IPC) H04Q |
| | * page 2, paragraph 48 - page 3, paragraph 56 * * page 13, paragraph 174 - page 16, paragraph 209 * * figures 1-4,5a,5b,27-30 * ----- | | |

The present search report has been drawn up for all claims

| Place of search | Date of completion of the search | Examiner |
|---|---|---|
| Munich | 18 October 2007 | Donnini, Carlo Luca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 00 8708

This annex lists the patent family members relating to the patent documents cited in the above-mentioned European search report.
The members are as contained in the European Patent Office EDP file on
The European Patent Office is in no way liable for these particulars which are merely given for the purpose of information.

18-10-2007

| Patent document cited in search report | | Publication date | Patent family member(s) | | Publication date |
|---|---|---|---|---|---|
| WO 2006043782 | A | 27-04-2006 | KR<br>US | 20060054117 A<br>2006140154 A1 | 22-05-2006<br>29-06-2006 |
| US 2005281219 | A1 | 22-12-2005 | EP<br>WO | 1756974 A1<br>2005125054 A1 | 28-02-2007<br>29-12-2005 |
| US 2007070908 | A1 | 29-03-2007 | WO | 2007038729 A2 | 05-04-2007 |

EPO FORM P0459

For more details about this annex : see Official Journal of the European Patent Office, No. 12/82